# EUROPEAN PATENT APPLICATION

(11) **EP 1 329 883 A1**
(43) Date of publication of application: **23.07.2003**
(21) Application number: 01970236.4
(22) Date of filing: 26.09.2001
(51) Int. Cl.: G11B 7/30, G11B 7/007

(54) **OPTICAL DISK**

(30) Priority: 27.09.2000 JP 2000293733; 27.02.2001 JP 2001052917
(71) Applicant: MATSUSHITA ELECTRIC INDUSTRIAL CO., LTD., Kadoma-shi, Osaka 571-8501 (JP)
(72) Inventor: YOSHIKAWA, Akira, Nara-shi, Nara 631-0076 (JP); INOUE, Takashi, Osaka-shi, Osaka 535-0022 (JP)
(74) Representative: Jeffrey, Philip Michael
(86) International application number: JP0108405
(87) International publication number: WO02027717

(57) **Abstract**

In an optical disk 1 having a RAM area (10) in which writing is possible and a lead-in area (11) in which overwriting is not possible the track pitch of the lead-in area (11) and the track pitch of the RAM area (10) are substantially the same. In the lead-in area (11), of the A tracks (2A) and B tracks (2B) with different polarity of the tracking error signal, lead-in data (3) are written only into the A tracks (2A), whereby cross-talk in the lead-in area (11) can be improved considerably, and the RAM area (10) and the lead-in area (11) can share the same tracking control specifications.

## Description

### TECHNICAL FIELD

The present invention relates to optical disks for reproducing and recording data using laser light.

### BACKGROUND ART

In recent years, optical disks have been put into practice as storage media for large-volume data files as well as music and video, but their capacities are constantly increased with the goal of ever larger applications.

Conventionally, the structure of optical disks for larger capacities is specified in the DVD-RAM standard (ecma-272), for example. In the DVD-RAM standard, the track pitch of the ROM (read only memory) area in which overwriting is not possible as well as that in the RAM (random access memory) area in which writing is possible is in both cases 0.74 µm. This is the same as in the DVD-ROM standard (ecma-267). In the lead-in area, data are recorded on all tracks.

Setting the track pitch of the ROM area to the same track pitch as in the RAM area in this manner makes it possible to perform tracking control with the same specification.

On the other hand, since the track pitch of the ROM area is the same track pitch as in the RAM area, the following problems arise in a configuration in which the data are recorded on all tracks.

For example, there is the problem that even though the recording density of the RAM area may be increased by improving the recording film material or by improving the recording method and a narrowing of the tracks may have become possible, the track pitch at which the ROM area are readable is limited, so that the track pitch of the RAM area cannot be made narrower.

Furthermore, when only the track pitch of the RAM area is made narrow in order to increase the recording density only in the RAM area, then there will be a difference between the track pitches of the RAM area and the ROM area, and the problem arises that it is not possible to unify the specifications for the tracking control.

The present invention solves these problems, and it is an object of the present invention to provide an optical disk in which the same track pitch is maintained for the ROM area and the RAM area, and the specifications for the tracking control can be made the same, even when the recording density of the RAM area has been increased and the tracks have been narrowed.

### DISCLOSURE OF THE INVENTION

In order to achieve these objects, an optical disk of the present invention has a ROM area in which overwriting is not possible and a RAM area in which writing is possible, wherein the track pitch of the ROM area and the track pitch of the RAM area are substantially the same, and wherein data in the ROM area have been written into every other track. It should be noted that the fact that the track pitch is substantially the same means that the track pitch of the ROM area is the same as that of the RAM area, or that if there is a difference between the track pitches of the ROM area and the RAM area, that difference is within a tolerance range of a single tracking control specification. With this configuration, the effective track pitch of the data in the ROM area becomes double the track pitch of the RAM area, data can be read out accurately, and at the same time, the tracking control specifications can be shared by the ROM area and the RAM area, even when the tracks of the RAM area are narrowed.

### BRIEF DESCRIPTION OF THE DRAWINGS

Fig. 1A is a perspective view showing the configuration of an optical disk in accordance with a first embodiment of the present invention. Fig. 1B is a diagram showing the track configuration of the optical disk in accordance with the first embodiment.
Fig. 2 is a diagram showing the configuration of the servo area of the optical disk in accordance with the first embodiment of the present invention.
Fig. 3 is a waveform diagram of a signal attained by the reflection light of the servo area of the disk in accordance with the first embodiment of the present invention.
Fig. 4A is a perspective view showing the configuration of an optical disk in accordance with a second embodiment of the present invention. Fig. 4B is a diagram showing the track configuration of the optical disk in accordance with the second embodiment.
Fig. 5A is a perspective view showing the configuration of an optical disk in accordance with a third embodiment of the present invention. Fig. 5B is a diagram showing the track configuration of the optical disk in accordance with the third embodiment.
Fig. 6A is a perspective view showing the configuration of an optical disk in accordance with a fourth embodiment of the present invention. Fig. 6B is a diagram showing the track configuration of the optical disk in accordance with the fourth embodiment.

### BEST MODE FOR CARRYING OUT THE INVENTION

In a preferred embodiment of the present invention, an optical disk has a ROM area in which writing is impossible and a RAM area in which writing is possible. The track pitch of the ROM area is substantially the same as the track pitch of the RAM area, and the data of the ROM area are written on every other track. It is also possible to provide jump areas for jumping to the neighboring track at predetermined positions on the tracks of the ROM area. Thus, even with narrower tracks, it is possible to read out data from the ROM area accurately, while at the same time, the specification for the tracking control can be shared for the ROM area and the RAM area. Moreover, by repeating a jump operation at a predetermined position, it is possible to avoid the useless tracing of unrecorded tracks in the ROM area.

In another preferable embodiment of the present invention, an optical disk has a ROM area in which writing is impossible and a RAM area in which writing is possible, the track pitch of the ROM area is substantially the same as the track pitch of the RAM area, the data of the ROM area are written on every other track, and the tracks of the ROM area are configured as a double spiral. Thus, even with narrower tracks, it is possible to read out data from the ROM area accurately, while at the same time, the ROM area and the RAM area can share the specification for the tracking control. Moreover, since the ROM area is configured as a double spiral, data can be read continuously.

In another preferable embodiment of the present invention, an optical disk has a ROM area in which writing is impossible and a RAM area in which writing is possible, the track pitch of the ROM area is substantially the same as the track pitch of the RAM area, the data of the ROM area are written on every other track, and all tracks are configured as a double spiral. Thus, even with narrower tracks, it is possible to read out data from the ROM area accurately, while at the same time, the ROM area and the RAM area can share the specification for the tracking control. Moreover, since the ROM area is configured as a double spiral, the data on every other track can be read continuously, and since also the RAM area is configured as a double spiral, the track joining the ROM area and the RAM area can be configured continuously, and smooth movement between these areas becomes possible.

The following is a more detailed description of embodiments of the present invention with reference to the drawings.

### First Embodiment

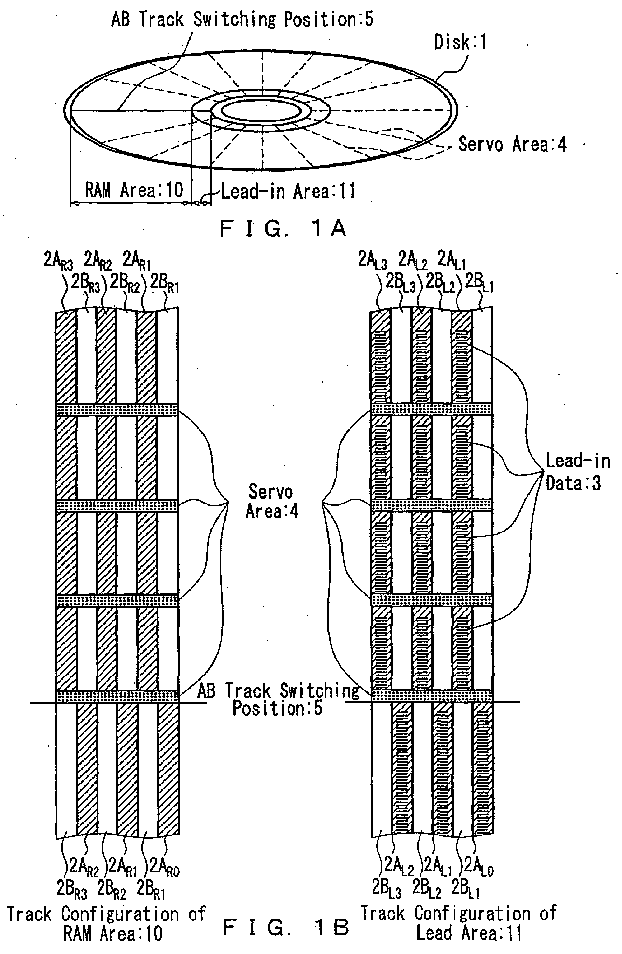

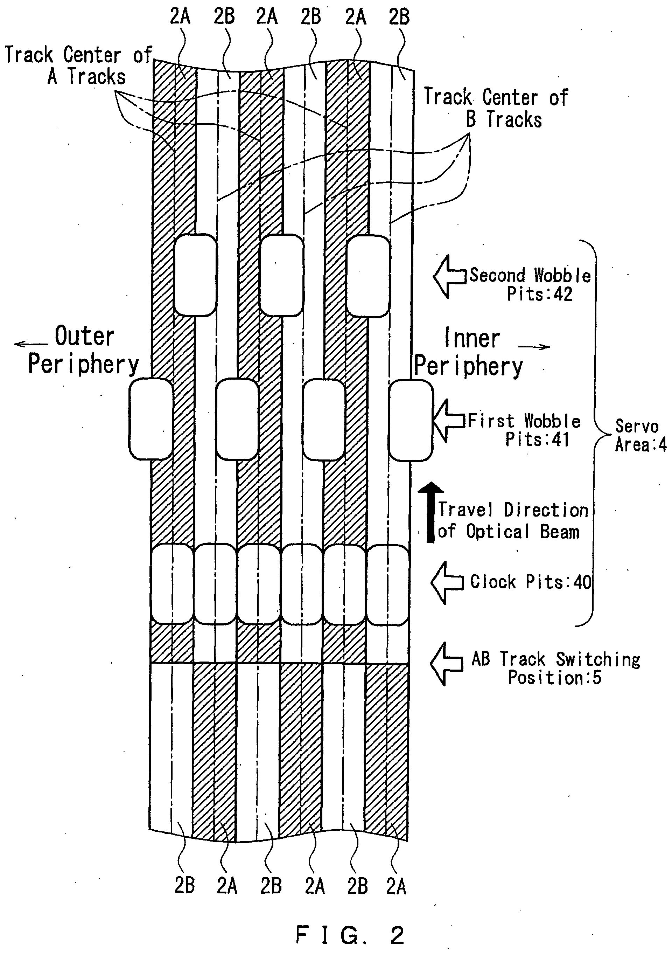

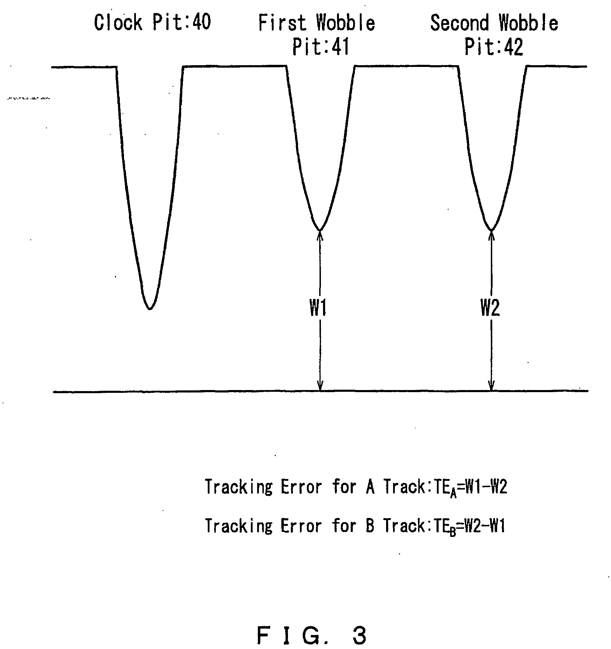

Fig. 1A and Fig. 1B show a first embodiment of an optical disk of the present invention. In Fig. 1A, numeral 1 denotes a disk, whose recording surface is partitioned in the radial direction into a lead-in area 11 and a RAM area 10. Numeral 4 denotes servo areas arranged in the radial direction on the disk 1. With these servo areas, the tracking error signal can be detected, as will be explained below in greater detail with Fig. 2 and Fig. 3.

As shown in Fig. 1B, the tracks on the disk 1 have a spiral-shaped arrangement, in which A tracks 2A and B tracks 2B with different polarity of the tracking error signal are linked together in alternation, with AB track switching positions serving as joints. This track configuration and the track pitch are shared by the lead-in area 11 and the RAM area 10. Furthermore, in the lead-in area 11, the data (lead-in data 3) are recorded only in the A tracks 2A, and no data are recorded in the B tracks 2B, in which there are only the servo areas 4.

It should be noted that it is preferable that the track pitch of the lead in area 11 is the same as that of the RAM area 10, and when the track pitch of the lead-in area 11 is different from that of the RAM area 10, then that difference should be within a tolerance range of a single specification for the tracking control. For example, the track pitches of the lead-in area 11 and the RAM area 10 should be within an error range of about 5% with respect to the specified track pitch. However, this number is merely an example, and the present invention is not limited thereto. For example, also in disks in which the recording density of the RAM area is increased and the tracks are narrowed, the track pitches of the lead-in area 11 and of the RAM area 10 can be specified to any numerical range, as long as they are within a tolerance range of a single specification for the tracking control.

Fig. 2 is a diagram showing the configuration of the servo areas 4. Fig. 3 shows a waveform of a reproduction signal in the servo area. As shown in Fig. 2, the servo areas 4 formed along the radial direction on the disk 1 are provided with clock pits 40 for generating a clock and first and second wobble pits 41 and 42 for generating a tracking error signal. The clock pits 40 are all placed on the track center, whereas the first and second wobble pits 41 and 42 are placed in alternation on the borders between the A tracks 2A and the B tracks 2B in the radial direction. If the beam irradiated onto the disk 1 moves in the direction indicated by the arrow in Fig. 2, then the signal detected from the reflecting light is a waveform as shown in Fig. 3. From the timing of the clock pits 40, the bottom values (w1 and w2) of the first and second wobble pits 41 and 42 are detected, and their difference is taken as the tracking error signal. However, depending on whether the A tracks 2A are traced or the B tracks 2B are traced, the tracking error signal (TE) has opposite polarities (TE_{A} and TE_{B}).

When a disk 1 configured as above is reproduced, the lead-in data 3 in the lead-in area 11 are output every other rotation, but since there are no data recorded in the tracks (B tracks 2B) neighboring the tracks on which the lead-in data 3 are recorded (A tracks 2A), the track pitch of the lead-in data 3 is doubled, and cross-talk can be reduced significantly. And since the method for producing a tracking error signal and the track pitch are the same for the RAM area 10 and the lead-in area 11, tracking control can be performed with exactly the same configuration.

That is to say, with this embodiment, even when the recording density of the RAM area 10 is increased and the tracks are significantly narrowed, the track pitch is shared by all areas on the disk 1 and the tracking error detection can be performed with the servo areas 4 arranged in the radial direction of the disk 1, so that all of the tracking control can be shared for the RAM area 10 and the lead-in area 11.

Furthermore, by adopting a configuration in which the lead-in data 3 are recorded on every other track in the lead-in area 11, the cross-talk during reproduction of the lead-in area 11 can be reduced significantly.

### Second Embodiment

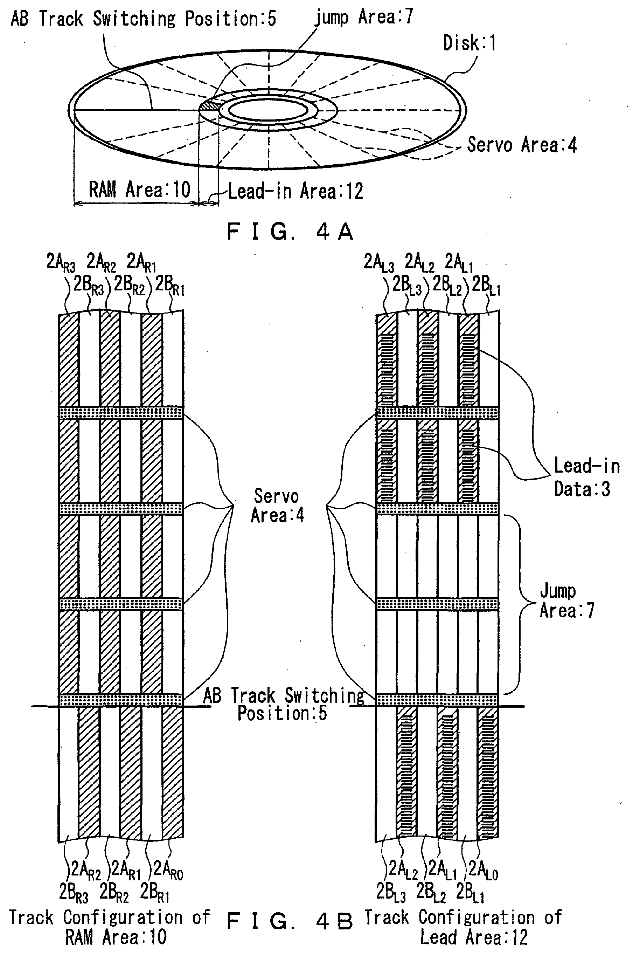

Fig. 4 shows a second embodiment of an optical disk of the present invention. As shown in Fig. 4A, the optical disk 1 in accordance with this embodiment has a jump area 7 in a portion of the lead-in area 12, for jumping during reproduction from the B tracks 2B to the A tracks 2A. As shown in magnification in Fig. 4B, the jump area 7 is provided directly after the AB track switching position 5. In this jump area 7, no data at all are recorded on the B tracks 2B, and no data that need to be read out are recorded on the A tracks 2A. The structural elements besides the jump area 7 are the same as in the first embodiment shown in Fig. 1, so that their further explanation has been omitted.

When the disk 1 of this embodiment configured as described above is reproduced, and an A track 2A (for example 2A_{L0}) on which data are recorded in the lead-in area 12 ends and a B track 2B (2B_{L1}) is entered, then the passing of the AB track switching position 5 is detected. At this time a jump operation for one track towards the outer side of the disk 1 is initiated, and a movement to the next A track 2A (2A_{L1}) is carried out. As explained above, no lead-in data 3 are recorded in the A track 2A at the section of the jump area 7, so that if the jump area 7 is set to a suitable length such that the jump operation can be finished within the jump area 7, the lead-in data 3 that are recorded in the A track 2A after the jump can be reproduced from the start, and no data will be omitted. Furthermore, as in the first embodiment, the track pitch of the reproduction data is doubled, cross-talk can be reduced significantly, and the tracking control can be performed by exactly the same configuration, because the method for producing a tracking error signal and the track pitch are the same for the RAM area 10 and the lead-in area 12.

That is to say, with this embodiment, even when the recording density of the RAM area 10 is increased and the tracks are significantly narrowed, the track pitch is shared by all areas on the disk 1 and the tracking error detection can be performed with the servo areas 4 arranged in the radial direction of the disk 1, so that all of the tracking control can be shared for the RAM area 10 and the lead-in area 12.

Furthermore, by adopting a configuration in which the lead-in data 3 are recorded on every other track in the lead-in area 12, the cross-talk during reproduction of the lead-in area 12 can be reduced significantly.

In addition, by providing the jump area 7 in the lead-in area 12, reading is possible with high efficiency in which no reading of the A tracks 2A on which lead-in data 3 are recorded is omitted.

### Third Embodiment

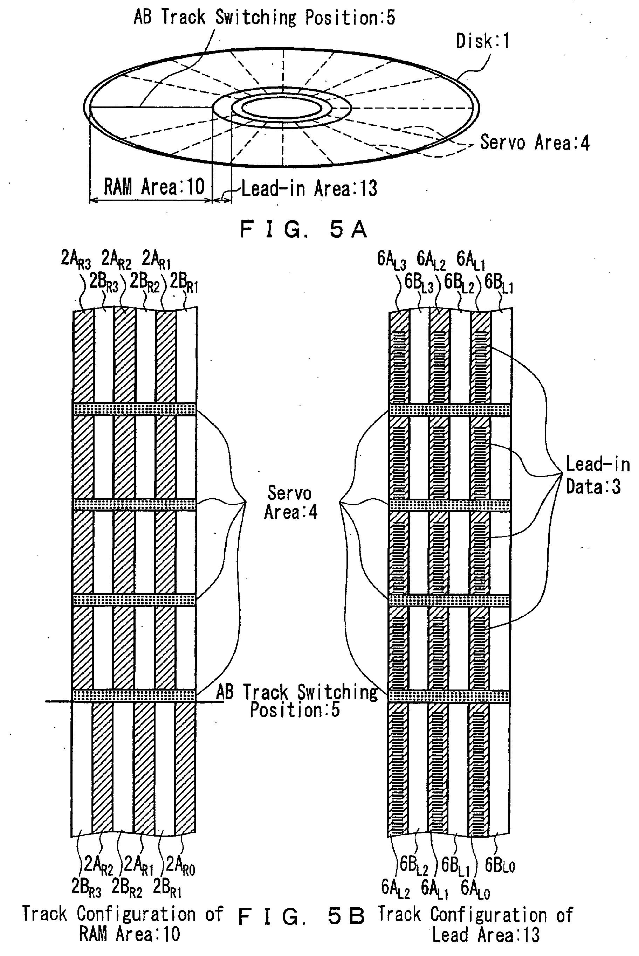

The following is an explanation of a third embodiment of an optical disk in accordance with the present invention. As shown in Fig. 5A and Fig. 5B, in the disk 1 according to this embodiment, the track configuration of the RAM area 10 is the same as in the first embodiment shown in Fig. 1, but in the lead-in area 13, there is no AB track switching position 5, and A tracks 6A on which the lead-in data 3 are recorded and B tracks 6B on which no data are recorded are respectively linked to one another continuously in a double spiral configuration. The structural elements besides the track configuration of the lead-in area 13 are the same as in the first embodiment shown in Fig. 1, so that their further explanation has been omitted.

When the disk 1 of this embodiment configured as described above is reproduced, if the A tracks 6A on which data are recorded in the lead-in area 13 are tracked, then data can be read in continuously, and data can be read in stably and with high speed without waiting states at unrecorded portions or jump operations to neighboring tracks. Furthermore, as in the first embodiment, the track pitch of the reproduction data is doubled and cross-talk can be reduced significantly. And since the method for producing a tracking error signal and the track pitch are the same for the RAM area 10 and the lead-in area 13, tracking control can be performed with exactly the same configuration.

That is to say, with this configuration, even when the recording density of the RAM area 10 is increased and the tracks are significantly narrowed, the track pitch is shared by all areas on the disk 1 and the tracking error detection can be performed with the servo areas 4 arranged in the radial direction of the disk 1, so that all of the tracking control can be shared for the RAM area 10 and the lead-in area 13.

Furthermore, by adopting a configuration in which the lead-in data 3 are recorded on every other track in the lead-in area 13, the cross-talk during reproduction of the lead-in area 13 can be reduced significantly.

In addition, data can be read in continuously, because the track configuration of the lead-in area 13 is a double spiral configuration of the A tracks and the B tracks.

### Fourth Embodiment

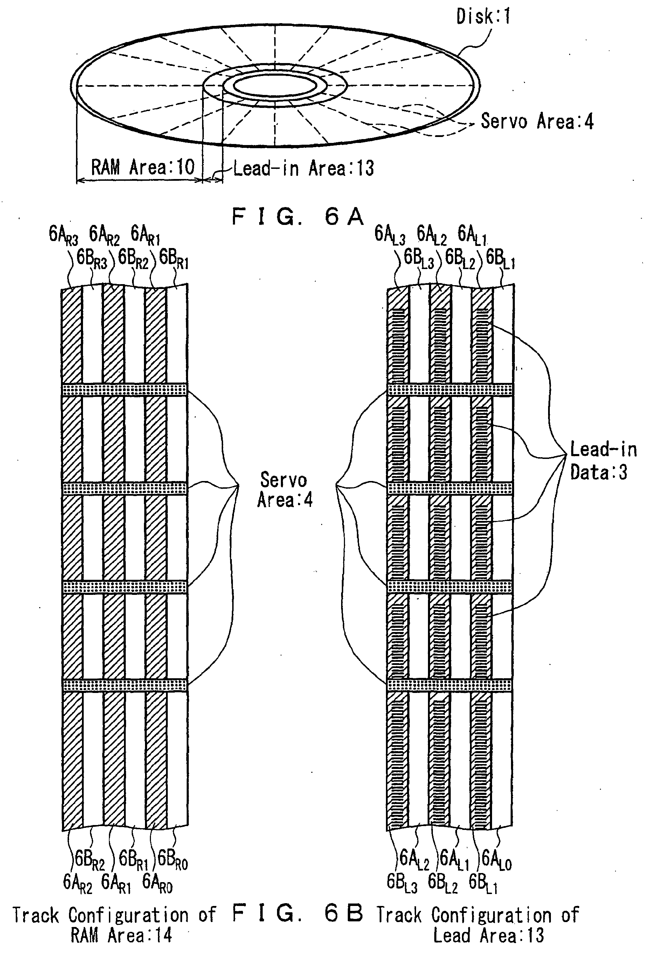

The following is an explanation of a fourth embodiment of an optical disk in accordance with the present invention. In Fig. 6A and Fig. 6B, the track configuration of the lead-in area 13 is the same as in the third embodiment shown in Fig. 5A and Fig. 5B. Like the lead-in area 13, the RAM area 14 has no AB track switching positions 5, and has a spiral-shaped arrangement, in which A tracks 6A and B tracks 6B with different polarity of the tracking error signal are linked together. The structural elements besides the track configuration of the RAM area 14 are the same as in the third embodiment shown in Fig. 5A and Fig. 5B, so that their further explanation has been omitted.

When the disk 1 of this embodiment configured as described above is reproduced, if the A tracks 6A on which data are recorded in the lead-in area 13 are tracked as in the third embodiment, then data can be read in continuously, and data can be read in stably and with high speed without waiting states at unrecorded portions or jump operations to neighboring tracks. Moreover, also the tracks 6A and 6B of the RAM area 14 have a double spiral configuration, so that the track configuration at the joint between the lead-in area 13 and the RAM area 14 becomes continuous, and a smooth movement between these areas becomes possible. Furthermore, as in the first embodiment, the track pitch of the reproduction data is doubled and cross-talk can be reduced significantly. And since the method for producing a tracking error signal and the track pitch are the same for the RAM area 14 and the lead-in area 13, tracking control can be performed with exactly the same configuration.

That is to say, with this configuration, even when the recording density of the RAM area 14 is increased and the tracks are significantly narrowed, the track pitch is shared by all areas on the disk 1 and the tracking error detection can be performed with the servo areas 4 arranged in the radial direction of the disk 1, so that all of the tracking control can be shared for the RAM area 14 and the lead-in area 13.

Furthermore, by adopting a configuration in which the lead-in data 3 are recorded on every other track in the lead-in area 13, the cross-talk during reproduction of the lead-in area 13 can be reduced significantly.

In addition, data can be read in continuously, because the track configuration of the lead-in area 13 is a double spiral configuration of the A tracks and the B tracks.

Moreover, also the tracks configuration of the RAM area 14 is a double spiral of the A tracks and the B tracks, so that the track configuration at the joint between these areas becomes continuous, and a smooth movement between these areas becomes possible.

In the above four embodiments, the servo areas 4 were shared in all areas on the disk 1, but it is also possible to adopt different configurations at the RAM areas 10, 14 and the lead-in areas 11 to 13, and the present invention is not limited to such a configuration. For example, it is possible to perform tracking error detection in the RAM area 10 using grooves, and to perform tracking error detection with pits in the lead-in area 13.

Moreover, in the above four embodiments, the lead-in areas 11 to 13 are formed inward from the RAM areas 10 and 14, but it is also possible to form the lead-in areas 11 to 13 at the outermost circumference, or to form them at an intermediate position of the RAM areas 10 and 14, and the present invention is not limited to such a configuration.

### INDUSTRIAL APPLICABILITY

As described in the foregoing, with the present invention, an optical disk can be provided with which the tracking control is shared by the lead-in area and the RAM area by sharing the track pitch, and the cross-talk during reproduction of the lead-in area can be reduced significantly, even when the recording density of the RAM area on the disk is increased.

## Claims

1. An optical disk having a ROM area in which overwriting is not possible and a RAM area in which writing is possible,
wherein the track pitch of the ROM area and the track pitch of the RAM area are substantially the same, and
wherein data in the ROM area have been written into every other track.

2. The optical disk according to claim 1, wherein the tracks on the disk comprise A tracks and B tracks with different polarity of the tracking error signal that are linked together in alternation with a predetermined radial position serving as a joint.

3. The optical disk according to claim 1, further comprising, on tracks of the ROM area, a jump area for jumping to a neighboring track in radial direction.

4. The optical disk according to claim 3, wherein in the jump area, no data serving a purpose are written into the A tracks or the B tracks.

5. The optical disk according to claim 1, wherein the tracks of the ROM area are configured as a double spiral.

6. The optical disk according to claim 5, wherein also the tracks of the RAM area are configured as a double spiral.
